# EUROPEAN PATENT SPECIFICATION

(11) **EP 1 257 977 B1**
(45) Date of publication and mention of the grant of the patent: **25.08.2004**
(21) Application number: 01915199.2
(22) Date of filing: 06.02.2001
(51) Int. Cl.: G07F 7/08, H04M 17/00

(54) **METHOD FOR DELIVERING SERVICES BY WAY OF PREPAID CHIP CARDS**
VERFAHREN ZUM LIEFERN VON DIENSTLEISTUNGEN MITTELS VORBEZAHLTER CHIPKARTEN
PROCEDE PERMETTANT DE METTRE A DISPOSITION DES SERVICES AU MOYEN DE CARTES A PUCE PREPAYEES

(30) Priority: 14.02.2000 NL 1014371
(43) Date of publication of application: 20.11.2002
(73) Proprietor: Koninklijke KPN N.V., 2509 CH Den Haag (NL)
(72) Inventor: KERKDIJK, Hendrikus, NL-9713 EX Groningen (NL); MULLER, Frank, NL-2623 NJ Delft (NL); ROELOFSEN, Gerrit, NL-2331 AH Leiden (NL)
(74) Representative: Wuyts, Koenraad Maria
(86) International application number: PCT/EP2001/001310
(87) International publication number: WO 2001/059724

(56) References cited:
- EP-A- 0 451 057
- WO-A-93/20539
- WO-A-95/34161
- WO-A-97/14118
- DE-A- 19 716 068
- DE-A- 19 753 933
- DE-U- 29 518 772
- US-A- 4 700 055

## Description

The invention relates to a method for delivering services, by way of prepaid chip cards, between a terminal accessible to the service recipient and an infrastructure of the service provider that is not directly accessible to the recipient, during use wirelessly connected to the terminal, the method comprising:
a) inputting the chip card into the terminal; b) verifying the identity and the validity of the chip card and/or the identity of the recipient; c) updating, during use of the chip card, a counter which represents the value of the card at a certain moment, and the periodic devaluation of this counter after step
b) during the usage of the service.

It is known that the value of such prepaid cards is regularly represented by a counter on the card which is devaluated by way of interaction with a terminal, such as a telephone booth in telephony by way of the telephone-booth infrastructure.

In this case, the terminals contain a so-called Secure Application Module (SAM), i.e., a chip containing cryptographic information. In this way, the validity and the value of the card may be verified.

Such methods are known generally and have the following drawbacks: it often proves to be ever more difficult to safeguard the cards and SAMs-adequately due to the fact that new attacks on the components are continuously being developed.

Controlling fraud within prepaid card services, therefore, is a continuous source of care and attention.

WO 95 34161 A discloses a pre-paid card system enabling customers to make purchases using an authorized card. The system includes a plurality of cards, a host computer, a plurality of on-site activation terminals and a main processor. Each of the cards has a security number associated therewith. The card is typically formed of cardboard, paper or plastic and may include the security number in cleartext under a suitable blackout. The main management and processing of the system is effected by the host computer. The host includes a database for storing security numbers associated with authorized cards. The data terminals are remote from the host computer and connectable thereto for transmitting data between the terminals and the host computer. The processor is controlled by the host computer for enabling customer purchases using the authorized cards.

The invention now overcomes these objections. Aspects of the invention are disclosed in independent claim 1.

In this way, the counters are centralised in the network, i.e., stored in the environment of the service provider.

The counters, therefore, become less accessible to, and are less to be influenced by unauthorised third parties.

Therefore, fraud can diminish.

In an advantageous embodiment of the invention, the method will be applied for wireless telephony, determining the identity and the validity of the card taking place based on a well-known GSM technique.

In other advantageous embodiments of the invention, the delivery of services comprises payment of parking services through parking meters or access to multimedia columns.

The invention will now be explained, on the basis of the drawing and the description, in further detail.

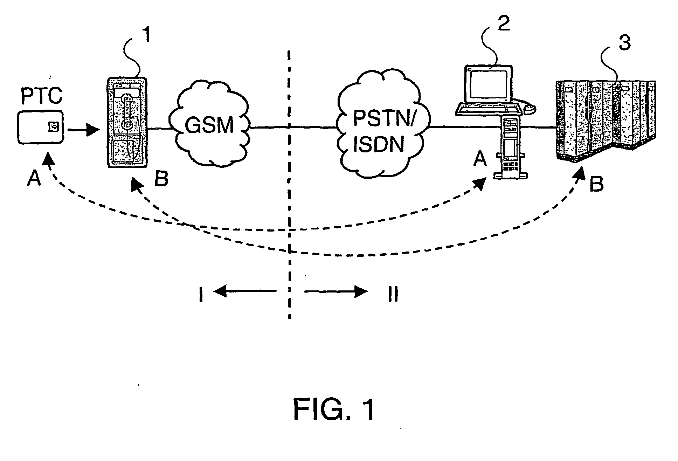

FIG. 1 schematically shows an advantageous embodiment of the invention.

With reference to FIG. 1, an architecture is shown, within which offering of wireless telephony services by way of Prepaid Telephone Cards (PTC) can be carried out.

In order to make use of a wireless telephony service, a client should enter his prepaid chip card PTC into the terminal, in this case telephone booth 1. The terminal is located in an area I, accessible to the recipient of the service in any appropriate way.

Subsequently, the following processes are carried out:
1. Authentication A-A: the identity and the validity of the card PTC should be verified and, for this purpose, use is being made of GSM architecture, known per se and existing, comprising an authentication server 2 in the infrastructure II of the service provider not directly accessible to the service recipient.
2. Devaluation for counter B-B: for each counter PTC, a counter is updated which is located in the infrastructure of the service provider (back-office system 3). Said counter represents the value of the card PTC at a certain moment. As soon as the authentication process A-A is run through successfully, during usage of the service (in this case telephoning), this counter should be devaluated periodically. This takes place in a manner known per se and will therefore not be described in further detail.
The terminal 1 can be coupled to the fixed infrastructure of the service provider, in any appropriate way , e.g., as indicated in the figure, by way of a GSM network, a transmitting aerial (not shown) and a PSTN/ISDN network. Such networks are known per se to experts, and will not be described in detail. The card PTC can, in this way, prove its identity to the authentication server 2 in the back office 3, by way of the GSM authentication algorithm known per se. In an advantageous way, the prepaid chip card has for this purpose, the form of a SIM (Secure Identification Module) card. SIM cards are known per se and are located, up till now, in GSM devices. In this advantageous embodiment of the invention, each terminal, in which the chip card is introduced, in fact functions as a GSM device.

The invention offers the following advantages: a) the fact that the counter is present in the network of the service provider, contrary to the known situation, in which the counter is stored on the card, offers a high degree of security, since all counters are located in the infrastructure of the service provider, and therefore are not accessible to the service recipients; b) the GSM authentication algorithm is very secure and is safer than the algorithm such as it is executed between card and SAM; c) it is now no longer necessary to include SAMs in the terminal, so that a possible attack point for frauds is taken away; d) it is possible to upgrade prepaid SIM cards, so that an upgrading functionality can be included in the service.

Checking the identity of the service recipient may advantageously occur with the help of a pin code or biometric techniques.

Various modifications of the method according to the invention will become clear to experts after inspection of the above description and the drawing, and need therefore not be explained in greater detail.

Such modifications shall be deemed within the framework and the scope of protection of the present invention.

## Claims

1. Method for delivering services, by way of prepaid chip cards (PTC), between a terminal (1) accessible to the service recipient and an infrastructure (II) of the service provider not directly accessible to the service recipient, during use wirelessly connected to the terminal (1), the method comprising:
a) inputting the chip card (PTC) into the terminal (1);
b) verifying the identity and the validity of, the chip card (PTC) and/or the identity of the service recipient;
c) updating during use of the chip card (PTC), a counter which represents the value of the card at a certain moment, and, after step b), during the usage of the service, periodically devaluating this counter, the counter being located-in the infrastructure (II) of the service provider not accessible to the service recipient,
**characterised in that**:
- the terminal (1) is a payphone that is coupled to the fixed infrastructure (PSTN/ISDN) of the service provider via a mobile communications network (GSM);
- step b) is carried out with the help of an authentication algorithm within the architecture of said mobile communications network (GSM).

2. Method according to claim 1, **characterised in that** step b) is executed in the back office (3) of the service provider.

3. Method according to claim 1 or 2, **characterised in that** the prepaid chip card (PTC) is a telephone card.

4. Method according to claim 1, **characterised in that** the services comprise paying for parking services by way of parking metres.

5. Method according to claim 1, **characterised in that** the services comprise getting access to multimedia services.

6. Method according to any of the preceding claims, **characterised in that** the prepaid chip, card has the form of a SIM (Secure Identification Module) card.

7. Method according to any of the preceding claims, **characterised in that** the identity of the.service recipient is checked by means of a PIN code.

8. Method according to any of the claims 1 through 6, **characterised in that** the identity of the service recipient is checked by means of biometric techniques.

## Patentansprüche

1. Verfahren zum Liefern von Dienstleistungen mittels vorbezahlter Chipkarten (PTC) zwischen einem Endgerät (1), welches für den Dienstleistungsempfänger zugänglich ist, und einer Infrastruktur (II) des Dienstleistungslieferanten, die dem Dienstleistungsempfänger nicht direkt zugänglich ist, und die während des Einsatzes drahtlos mit dem Endgerät (1) verbunden ist, wobei das Verfahren umfasst:
a.) Eingabe der Chipkarte (PTC) in das Endgerät (1),
b.) Überprüfen der Identität und der Gültigkeit der Chipkarte (PTC) und/oder der Identität des Dienstleistungsempfängers,
c.) Auffrischen von einem Zähler während des Einsatzes der Chipkarte (PTC), der den Wert der Karte zu einem gewissen Zeitpunkt darstellt und eine periodische Verminderung dieses Zählers nach Schritt b) während des Einsatzes des Dienstes, wobei der Zähler in der Infrastruktur (II) des Dienstleistungslieferanten angeordnet ist, die dem Dienstleistungsempfänger nicht direkt zugänglich ist,
**dadurch gekennzeichnet,**
- **dass** das Endgerät (1) eine Telefonkabine ist, die mit der festen Infrastruktur (PSTN/ISDN) des Dienstelieferanten über ein mobiles Kommunikationsnetzwerk (GSM) verbunden ist, und
- **dass** Schritt b) mit der Hilfe eines Authentifizierungs-Algorithmus innerhalb der Architektur des besagten mobilen Kommunikationsnetzwerkes (GSM) ausgeführt wird.

2. Verfahren nach Anspruch 1, **dadurch gekennzeichnet, dass** Schritt b) im Back-Office (3) des Dienstleistungsanbieters ausgeführt wird.

3. Verfahren nach Anspruch 1 oder 2, **dadurch gekennzeichnet, dass** die vorbezahlte Chipkarte (PTC) eine Telefonkarte ist.

4. Verfahren nach Anspruch 1, **dadurch gekennzeichnet, dass** die Dienstleistungen das Zahlen von Parkdienstleistungen über Parkuhren umfassen.

5. Verfahren nach Anspruch 1, **dadurch gekennzeichnet, dass** die Dienstleistungen den Zugriff auf Multimedia-Dienste umfassen.

6. Verfahren nach einem der vorstehenden Ansprüche, **dadurch gekennzeichnet, dass** die vorbezahlte Chipkarte die Gestalt einer SIM-Karte (Secure Identification Module) aufweist.

7. Verfahren nach einem der vorstehenden Ansprüche, **dadurch gekennzeichnet, dass** die Identität des Dienstleistungsempfängers durch einen PIN-Code überprüft wird.

8. Verfahren nach einem der Ansprüche 1 bis 6, **dadurch gekennzeichnet, dass** die Identität des Dienstleistungsempfängers durch biometrische Techniken geprüft wird.

## Revendications

1. Procédé permettant de mettre à disposition des services au moyen de cartes à puce prépayées (PTC), entre un terminal (1) accessible au destinataire de service et une infrastructure (II) du fournisseur de services qui n'est pas directement accessible au destinataire pendant une utilisation raccordée de façon filaire au terminal (1), le procédé comprenant :
a) l'introduction de la carte à puce (PTC) dans le terminal (1) ;
b) la vérification de l'identité et la validité de la carte à puce (PTC) et/ou de l'identité du destinataire de service ;
c) la mise à jour pendant l'utilisation de la carte à puce (PTC), d'un compteur qui représente la valeur de la carte à un certain moment, et, après l'étape b), pendant l'utilisation du service, la décrémentation périodique de ce compteur, le compteur étant situé dans l'infrastructure (II) du fournisseur de services qui n'est pas accessible au destinataire de service,
**caractérisé en ce que** :
- le terminal (1) est un téléphone à paiement qui est couplé à l'infrastructure fixe (PSTN/ISDN) du fournisseur de services via un réseau de communications mobiles (GSM) ;
- l'étape b) est réalisée avec l'aide d'un algorithme d'authentification dans l'architecture dudit réseau de communications mobiles (GSM).

2. Procédé selon la revendication 1, **caractérisé en ce que** l'étape b) est exécutée dans le système (3) du fournisseur de services.

3. Procédé selon la revendication 1 ou 2, **caractérisé en ce que** la carte à puce prépayée (PTC) est une carte téléphonique.

4. Procédé selon la revendication 1, **caractérisé en ce que** les services comprennent le paiement de services de parking au moyen de parcmètres.

5. Procédé selon la revendication 1, **caractérisé en ce que** les services comprennent l'obtention de l'accès à des services multimédias.

6. Procédé selon l'une quelconque des revendications précédentes, **caractérisé en ce que** la carte à puce prépayée a la forme d'une carte SIM (Secure Identification Module - module d'identification de sécurité).

7. Procédé selon l'une quelconque des revendications précédentes, **caractérisé en ce que** l'identité du destinataire de service est vérifiée au moyen d'un code pin.

8. Procédé selon l'une quelconque des revendications 1 à 6, **caractérisé en ce que** l'identité du destinataire de service est vérifiée au moyen de techniques bio-métriques.
